# EUROPEAN PATENT APPLICATION

(11) **EP 1 320 050 A1**
(43) Date of publication of application: **18.06.2003**
(21) Application number: 01205108.2
(22) Date of filing: 28.12.2001
(51) Int. Cl.: G06F 17/60

(54) **Education financial instrument and method**

(30) Priority: 13.12.2001 GB 0129753
(71) Applicant: Gonzalez, Jose Ignacio, Newinton, Edinburgh EH16 5HH (GB)
(72) Inventor: Gonzalez, Jose Ignacio, Newinton, Edinburgh EH16 5HH (GB)

(57) **Abstract**

A metal coin or paper note embodying and representing solely educational value; as an amount as of services and/or goods from any private or partly private educational institution; and which is able to fluctuate in value; and which has worth in usefulness or importance to the possessor; utility and/or merit; and which can be purchased and sold, much like any other commodity or currency; and which can be invested and earn a rate of interest, and, as such, create education value over a period of time; and which can be packaged into the form and type of an educational gift, which a recipient may then use towards the purchase of services and/or goods from any educational institution, and which any educational institution will accept as a valid measure of exchange for its own services and/or goods when presented at its treasury or enrolment offices.

## Description

A recent, front-page headline from Great Britain's oldest student newspaper, Student - The Independent Voice, states "Student Debt Passes Billion. Students and politicians worry as new survey puts total student debt at £1.45 billion per year." (November 21, 2001)

The cost of an education, particularly, the cost of a higher education, has risen at a far greater pace than the cost of an average consumer good or service, not only in Great Britain, but also in much of the developed world.

Great Britain, as most of the developed world, has entered, collectively, a political, socio-economic era in which specialized knowledge, or information, specially that which is disseminated or passed on in the context of education, is almost indispensable to secure a comfortable standard of living, whether this knowledge, or specialized information, comes from the arts or sciences.

As more and more people demand better and better education to become better competitors and gain knowledge or information based advantages over others in a market-oriented society, the price of education will continue to rise. And since our collective knowledge or base seems to increase almost exponentially with layers and layers of scientific and technological advance, in the last 25 years or so, that are added to what we know, the educational process, whereby people learn and acquire information or knowledge, will become more essential to civilized society.

Although the process of learning or acquiring information is a life-long process, it is most intense, essential and necessary, for the average person, in his or her youth, i.e. between the ages of birth and 35 years of age. However, this is also the time in a person's life in which him or her has the least amount of possessions or property, specifically money, which is needed to be exchanged for information, or knowledge, acquired in the context of market-oriented educational institutions.

Therefore, on one hand, we have millions and millions of young people needing information or knowledge, held by market-oriented educational institutions, and, at the same time, not having enough funds or money to acquire this vital information or knowledge. On the other hand, we have mature, older people, and institutions, seeking to profit, and rightfully earn a margin on their financial services to allow, or give access, to the younger group, to specialized information or knowledge. While there is no moral ineptitude on either side of the equation, i.e. the youth needing, or demanding, knowledge or information disseminated via wholly market-oriented or partly market-oriented educational institutions, and the group holding the money or funds necessary to acquire this information, it points to a weakness, or a particular kind of backwardness, in the present and existing financial educational system, elicited and stated clearly in the recent newspaper headline mentioned above.

Additionally, there is a third large group of people, which, for purposes of presenting a broad background related to this invention, is worth mentioning. This group consists; not of the youth itself requiring or demanding information or knowledge from educational institutions; nor of the older group possessing the entirety of the funds, which are, nowadays, necessary to acquire information or knowledge disseminated by market-oriented educational institutions, i.e. universities; but of the warm circle of friends and family that surround the youth who needs or is seeking information and knowledge.

This warm circle of friends and family, which number also in the millions, and is greater collectively, than those who seek information and knowledge, since per each student or young person seeking or requiring information or knowledge disseminated by educational institutions, there are, on average, 10, 20 or 30 people, who would qualify as immediate friends or blood relatives, and who, on most occasions and circumstances, have a vested interest, and in the case of those in this group who are father and mother of the youth, demanding knowledge and information, which this same youth, will, hopefully, apply, and derive income or profit in the market-oriented society of which he or she is a part of, have an even greater concern that the young person acquire and possess the necessary information, and, therefore, have an inclination to help, or give funds, when necessary, which will accommodate the information or knowledge needs of this youth, and simplify the educational process of this youth, reducing his or her financial burden.

However, this task falls mostly on the youth's immediate family members, as would be his or her father and mother, or his or her grandparents. Given that there is this great concern, or vested interest, on the part of the youth's warm circle of friends and family, specifically concern which stems from parents and grandparents, there is still a problem because the youth in Britain, collectively, is still graduating with debt, and, in the case of those graduating from higher education institutions, such as universities, with "an average student debt to almost £7,500." (Student - The Independent Voice, November 21, 2001).

Now, this large, warm group of friends and family, in Great Britain, can be said to have a Judeo-Christian background, and a related social, cultural background, in which every year, on most occasions and circumstances, recur to the social custom and habit of giving gifts, a bit of something, whether the gift be a garment, food, a trinket, or money (which the recipient can then use to acquire whatever good or service he or she desires; naturally, within the boundaries of the total, cumulative value from the currency note or cash equivalent thereof received). However, this large, warm circle of friends and family, seldom, thinks of knowledge or information, specially that which is disseminated or passed on to others via educational institutions, as something which could be purchased, for either a small or large fee, excluding the value of the ability or power to receive or gain access to this information or knowledge itself, and then given to the youth, as a present or gift for a special occasion, as would constitute a birthday or a religious holiday, i.e. Christmas, Hanukah or Eid ul-Adha.

This large, warm circle of friends and family of the youth that is demanding, and is in need of knowledge or information from market-oriented institutions, simply does not give these kind of gifts mentioned above because they do not have access to a source that sells, in a market-oriented sense, general education value notes, or bits and pieces (in specific denominations) of the power, and opportunity, to gain access, and acquire, knowledge and information disseminated or passed on to the recipient, in this case the youth so often and so far referred to in this background information. In other words, friends and family of youth, who is demanding information and knowledge in the market-oriented society, do not think, or more appropriately, it does not occur to them to purchase education, or more accurately, a bit or piece of the power or opportunity to acquire knowledge and information that is disseminated or presented or provided by an institution of learning, and consequently, give to their friend or loved one, the youth, as a gift, during any special occasion, which in our society occurs once or twice per year for most people, because there is no financial, educational instrument or note (or more specifically currency) that specifically and wholly denotes and represents the kind of value herein described, specifically the value embodied by having access, or having the opportunity or wherewithal to information or knowledge disseminated or presented to others in the context of education. In other words, we do not have in our society, education-value notes, which could and would only be, or form, a measure of exchange for information or knowledge presented by educational institutions that are wholly or partly market-oriented institutions. These institutions, although in the thousands, and although each disseminates and specializes in many different kinds of information or knowledge that are subsequently demanded by youth for various purposes, are a finite group; so that the nature and use of the education-value notes herein mentioned can be said to have useful value and purpose not only within the context of acquiring knowledge and information, which is very broad minded, but also, within the limited, finite number of educational institutions that charge a price for their educational, or information dissemination services, and which constitute the educational, market-oriented system in Britain. Therefore, if one can imagine a metal or paper medium of exchange, for use in the market-oriented educational system of Britain, that would, first, allow people the unique opportunity to distinguish and differentiate the domain of education-value, or the value which the process of education, or of giving and receiving an education possesses inherently, from the all-including and encompassing domain of value, in the most general sense, containing all that one considers to have value, including life itself; and, second, give people, via the awareness of this form or kind of value, namely education-value, the opportunity to buy or purchase preferably for a minimal fee, a bit or piece of this kind or form of value, namely education-value, and therefore, through this process of identifying, recognizing, differentiating and distinguishing this particular kind of value, in the form of a unique looking metal or paper currency or form of exchange, the opportunity to give education in a most general sense, as a gift to anyone. And, through this process, of creating this unique form or exchange of value, via a metal or paper education value note or coin, give the purchaser of the note or coin, that which wholly and entirely represents the opportunity to learn anything at any British educational institution that charges a price for its educational services, the certainty and comfort that he or she (the purchaser or giver of this kind of gift) has indeed and unequivocally acquired a bit or piece of British education (disseminated by British market-oriented educational institutions) and can, therefore, give it (the note or currency) as a special meaningful gift, and in a psychological, emotional sense, this newly acquired education-value note, which has been acquired to be given as a gift, can become a channel or a medium of sorts, for the giver (the purchaser) to express and communicate that concern he or she has, that care and what some people would call love, for the recipient or youth.

Given that the purchaser has exchanged pounds, or British-government notes, for an educational note that is exchangeable for educational services at any educational institution in Great Britain that charges a fee for educational services, it is also possible, and foreseeable, much like a currency investor purchases currency from a foreign country, that he or she, who has acquired this educational note might hold on to it, and not give it to someone else as a gift, in the hope, and estimation, that its relative value, in relation to other sovereign notes, including the British pound, rises. After a given period of time, the purchaser of the note would exchange it back to the original currency he or she used to purchase the education-value note, and either gain, lose or remain at the same level at which it were originally exchanged. In other words, these education-value notes may rise or decline in value, much like sovereign bank notes do in relation to one another; clearly, an educational financial institution that inspired security, safety, reliability and forward-looking consistency, with a history of responsive, attentive customer-institution relations, would probably have to lend its name and credibility to successfully issue these education value notes in the market and inspire confidence in consumers and investors.

The chronological process whereby a consumer or customer may purchase an education value note or currency with the purpose of either (a) give it as a gift to someone else, i.e. a young family member or friend or (b) acquire the note(s) as a currency investment with the hope that it, the total value of the note(s) purchased, will increase at some future date when sold back into the original sovereign currency (or any other sovereign currency) used to purchase these education-value notes is as follows:
(1) The customer, the potential purchaser of the education value notes, sees an advertisement from either the financial, or educational financial institution, stating or presenting the opportunity to purchase education from any private, or partly private, British educational institution, in the form of an education value note issued by same institution advertising and issuing these education value notes, or from a cooperating, private or public authority, working in conjunction, i.e. partnering, with the original issuer of education value notes. The advertisement, if aimed at consumers wishing to purchase a unique, meaningful gift, i.e. during the current holiday season, might see a television or radio or print commercial presenting the opportunity to purchase a bit or piece of general British education disseminated by any wholly private or partly private British educational institution.
(2) The customer, encouraged and motivated by the advertisement, would approach the establishment providing these notes, i.e. a local branch from a British bank, and purchase for a small fee, i.e. for a small percentage fee of the total value of the education notes purchased, or, for a fixed small fee of a few pounds, or, for a combination price combining both the percentage method and the fixed fee, a specific amount of education value notes. Along with the newly acquired education value notes would also come a gift card in which the customer could write a special message for the recipient, i.e. a happy birthday or holiday message personally signed. Additionally, a small, brief pamphlet would be included for the recipient, the youth who is either presently enrolled in an educational institution or intends to attend or enrol in a British educational institution, describing the nature of the note, i.e. its education-value aspects, where and for what purpose it may or may not be used or exchanged, i.e. educational services from any British, wholly private or partly private educational institution. The pamphlet, for instance, might advertise a select group of educational institutions where these education notes might be applied for more than their face value, i.e. certain educational institutions might welcome or encourage students in general, or certain qualified students, to use their gifts, their education value notes, an equivalent of cash, in their institutions, as these notes, collectively, would increase the educational institutions total intake of cash or cash equivalent currencies.
(3) The customer, or financial, or educational financial institution, issuing these notes, would then mail the education value notes, entitling the recipient to purchase any kind of information or knowledge, or education, from any private, or partly private, educational institution, in the total amount or value presented or demonstrated on the face of these paper notes, along with the gift card filled and signed by the customer and a brief informational pamphlet describing the nature of the gift or notes received.
(4) Upon receipt of the gift, or education value notes, the recipient or youth, would have two options: (a) hold on to the notes and exchange them for any goods or services sold by any British educational institution, i.e. pay for tuition and enrol in a course or purchase books or any other goods an educational institution might be able to provide or sell, or (b) invest the received education value notes either with the original institutional issuer of these notes or with a cooperating institutional financial partner. The recipient of these notes, who now constitutes an investor of education value notes, would earn either a specific fixed or a variable rate of return or a combination of both. At any time in the future, the investor of these notes would be able to retrieve the notes from his or her personal account and either exchange them for educational services and/or goods from any educational institution or sell the notes back to the financial, or educational financial institutional issuer of the notes, for any sovereign notes from any country as would be sterling pounds.

In this latter process, where the education value notes are invested and earn a specific fixed or variable rate of return, or a combination of both, it is important and illustrative to the nature of the invention to note that, as a result of his or her decision, education value has been created and would now be part of the existing domain of education value, and more appropriately, that customer decision to invest the education value notes, as opposed to applying them or exchanging them for services of an educational institution, has, in fact, enlarged the existing domain of education value in the nation, even though this education value domain exists solely, and necessarily, within the domain of British sterling sovereign currency, or more accurately, within and inside the domain of general value.

The process whereby an investor purchases education value notes primarily as an investment with the hope or educated estimation to profit might originate from a more sober, serious advertisement, positioning education, or the access to valuable, specialized information, in the context of a service, which has seen a rise in its inherent relative value to other goods and services in the community, during the past 10 or 20 years, and might therefore motivate or encourage an investor to buy some British education in the hope that it (British education) will continue to rise in value at a higher pace than the value of most goods and services in Great Britain, therefore, presenting the investor with a unique opportunity to acquire something, namely education-value, in the amount that he or she wishes, that is, at the time the transaction occurs, cheap or inexpensive, and will, in great probability, and if past trend continues of the last 25 years, appreciate or gain value, providing the investor with a better rate of return than other common investments as might be government bonds, certificates of deposit, or even real estate investments.

Naturally, in this process, there would be no need for a gift card or a need to mail the notes to anyone. Simply, the notes would be purchased and an education-value notes account would be opened and maintained for the investor or customer. At any time in the future, he or she may exchange the education value notes back to sovereign currency or pass them on to a youth or loved one intending to obtain an education, or, use them himself or herself to acquire an education, i.e. a doctorate or masters degree in some area of study.

To conclude, this instrument is quite literally something, education-value, i.e. in a specific numerical amount, which can be: (1) purchased (2) used (3) given (4) stored and (5) sold; and, which, most importantly, once it has been issued and created, and introduced, cannot be reversed or destroyed, since it possesses and embodies indefinite life, as a fair and suitable equivalent for these particular, specific services and/or goods, and, similarly, serves indefinitely as a measure of exchange between said institutions and consumers, by virtue of its own, and the issuer's, legal and contractual definition, between the sovereign power and the issuer and subsequently the instrument itself, containing or comprising, indefinite life and meaning, for the parties concerned, and, most essentially, or specifically, information and/or material worth, for the bearer.

The following drawings describe and demonstrate some aspects of the invention:

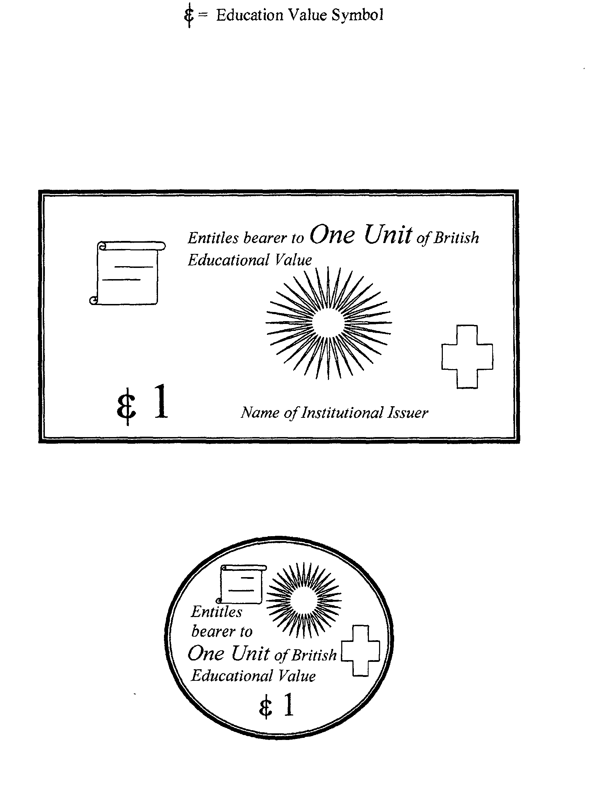

FIGURE 1: The education value paper note and metal coin.

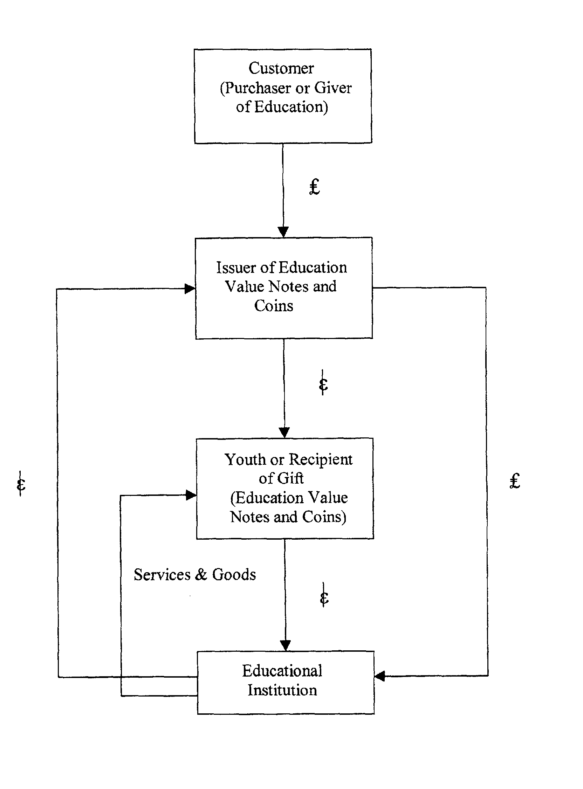

FIGURE 2: The chronological process of purchasing the education note; giving it to someone else as a gift; exchanging it for educational services and/or goods by the recipient; and finally, exchanging it back into sovereign bank notes by the educational institution.

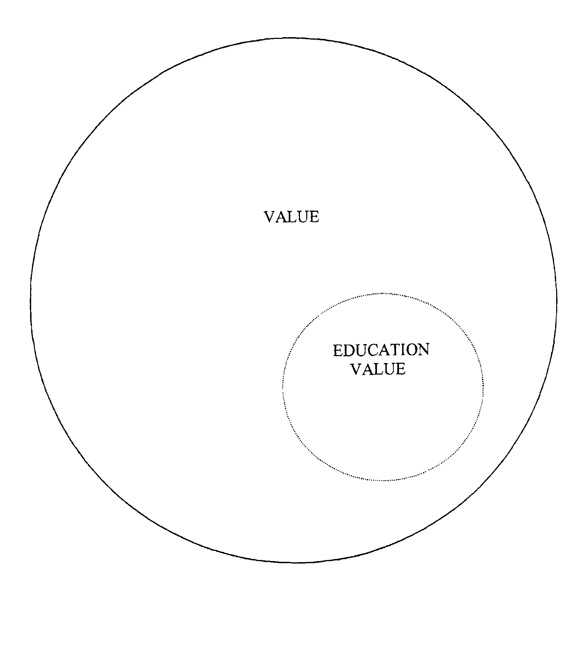

FIGURE 3: The domain of education value contained and embodied in and within the domain of value.

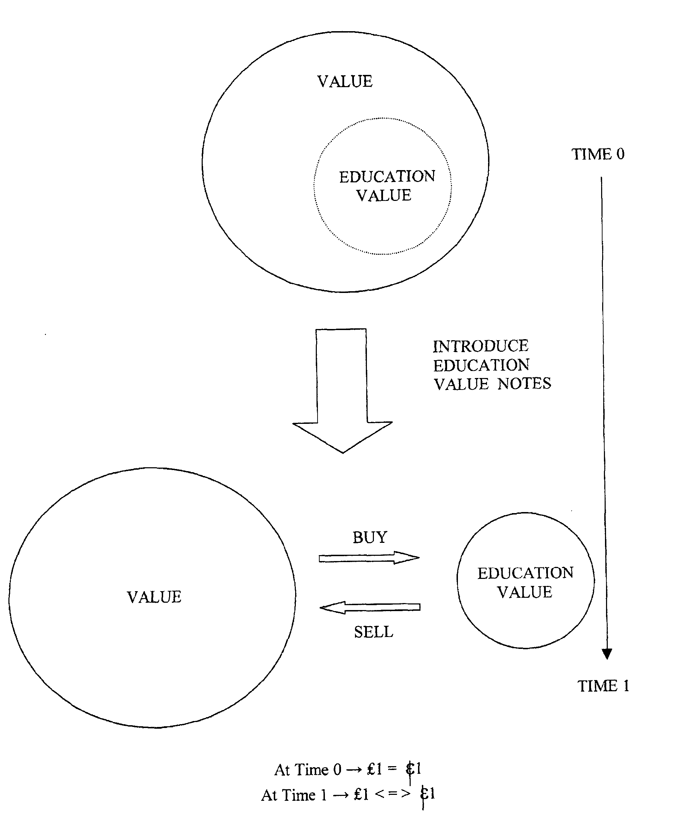

FIGURE 4: The result of introducing education value notes and distinguishing and differentiating the domain of education value from the all-encompassing domain of value.

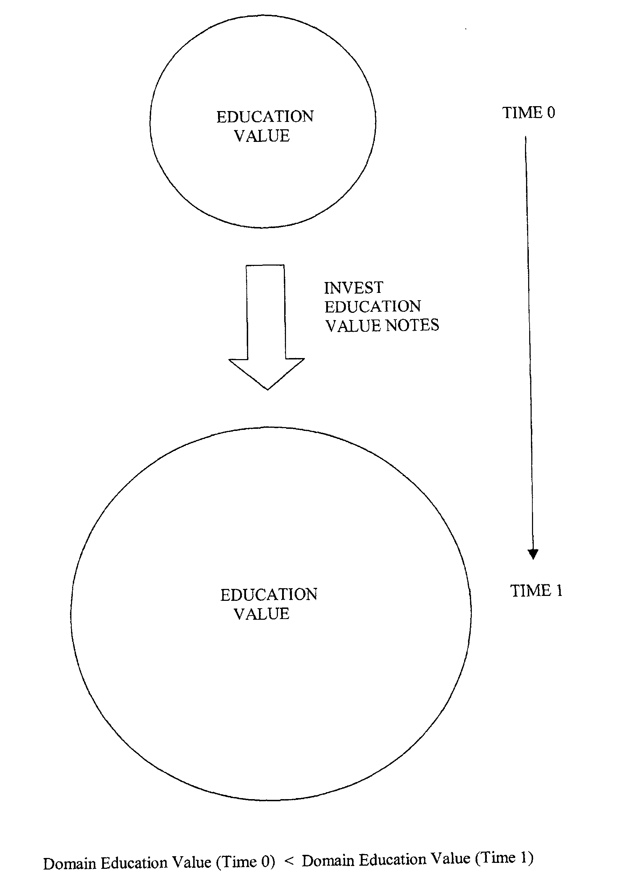

FIGURE 5: The result of investing education value notes and earning a rate of interest (or education value) during any given period of time.

## Claims

1. A metal coin or paper note entitling and authorizing the owner and holder of the coin or note to exchange it only, and only for, services and/or goods provided by any British or non-British educational institution that operates in Great Britain and, which charges people a fee for its services and goods; and which exists and operates, solely, to:
a. Develop the innate capacities of, especially by schooling or instruction.
b. Provide with knowledge or training in a particular area or for a particular purpose, i.e. decided to educate himself or herself in foreign languages; entered a seminary to be educated for the priesthood.
c. Provide with information; inform, i.e. a campaign that educated the public about the dangers of smoking.
d. Stimulate or develop the mental or moral growth of.
e. Develop or refine, i.e. one's taste or appreciation, and
f. Teach or instruct a person or group.

2. A metal coin or paper note, as described in claim 1, that gives people the opportunity to:
a. Acquire it or own it by exchanging sovereign bank notes for a small fixed fee, or, a percentage fee of the face value of the education notes acquired, or, for a combination of both, and,
b. Invest it at a fixed rate of interest, or a variable rate of interest, or a combination of both, and in so doing, create education-value, since the future pool of education value notes would be larger in amount or value and, since the notes would only be available for use in the educational system, i.e. to purchase tuition from any British educational institution.

3. A metal coin or paper note, as described in claims 1 and 2, which gives consumers the opportunity to acquire it or own it, in conjunction with a gift card, inside a specialty envelope and which then can be sent, mailed, or personally handed, as an educational, financial gift to a friend or loved one, for any special occasion, or just to show that the consumer cares for the recipient.

4. The chronological, methodological, implemental process, whereby a coin or paper note as described in claims 1, 2 and 3, can be acquired or purchased as a gift; then sent or given to someone else as a gift; then used or exchanged by the recipient to purchase goods and/or services from any wholly private or partly private educational institution operating, functioning and existing as described in claim 1, or, invested for a period of time and then used or exchanged for educational services and/or goods; and, finally, exchanged for sovereign bank notes by the educational institution at the institutional issuer of the education notes, or at a cooperating financial institutional partner, or, retained and invested by the educational institution to earn a rate of interest as described in claim 2.

## Amended claims

### Amended claims in accordance with Rule 86(2) EPC.

**1.** A paper note, or paper certificate, or metal coin, in any denomination, that entitles the owner or holder of the note, certificate or coin to purchase only and only services and/or goods from an European Union educational institution that charges customers (i.e. students) a price (i.e. tuition fees) for its educational services and/or goods and, which exists and operates solely to educate, i.e. to:
a. Develop the innate capacities of by schooling or instruction.
b. Provide with knowledge or training in a particular area or for a particular purpose (i.e. educate people in foreign languages; educate for the priesthood, etc.).
c. Providc with information; inform (i.e. a campaign that educates the public about the dangers of smoking, etc.)
d. Stimulate or develop the mental or moral growth of.
e. Develop or refine (i.e. one's taste or appreciation) and,
f. Teach or instruct a person or group;
and which can be exchanged for sovereign currencies (i.e. European euros, U.S. dollars, etc.) or any other instruments representing denominations in sovereign currencies (i.e. personal bank checks, etc.); and, which can be invested and, subsequently, earn interest earnings (i.e. education-value earnings) over a period of time into the future (much like foreign currency notes may be invested and accumulate interest earnings in its own sovereign currency over a period of time, i.e. U.S. dollar deposits, etc.); and which can be donated or given (i.e. without any cost to the recipient) who then can either, as stated above, purchase services and/or goods from any European Union educational institution that charges a price for its services and/or goods, invest it over a period of time and accumulate or earn education-value earnings, or exchange it (i.e. sell it) for sovereign currencies or any of its equivalents.

**2.** A metal coin or paper note, as described in claim 1, that gives people the opportunity to:
a. Acquire it or own it by exchanging sovereign or European Union bank notes for a small fixed fee, or, a percentage fee of the face value of the education notes acquired, or, for a combination of both, and,
b. Invest it at a fixed rate of interest, or a variable rate of interest, or a combination of both, and in so doing, create education-value, since the future pool of education value notes would be larger in amount or value and, since the notes would only be available for use in the educational system, i.e. to purchase tuition from any European Union educational institution.

**3.** A metal coin or paper note, as described in claims 1 and 2, which gives consumers the opportunity to acquire it or own it, in conjunction with a gift card, inside a specialty envelope and which then can be sent, mailed, or personally handed, as an educational, financial gift to a friend or loved one, for any special occasion, or just to show that the consumer cares for the recipient.

**4.** The chronological, methodological, implemental process, whereby a coin or paper note as described in claims 1, 2 and 3, can be acquired or purchased as a gift; then sent or given to someone else as a gift; then used or exchanged by the recipient to purchase goods and/or services from any wholly private or partly private educational institution operating, functioning and existing as described in claim 1, or, invested for a period of time and then used or exchanged for educational services and/or goods; and, finally, exchanged for sovereign or European Union bank notes by the educational institution at the institutional issuer of the education notes, or at a cooperating financial institutional partner, or, retained and invested by the educational institution to earn a rate of interest as described in claim 2.
